# EUROPEAN PATENT APPLICATION

(11) **EP 4 394 908 A1**
(43) Date of publication of application: **03.07.2024**
(21) Application number: 23198511.0
(22) Date of filing: 20.09.2023
(51) Int. Cl.: H01M 4/04, H01M 4/139, H01M 4/36, H01M 4/66, H01M 10/0525, H01M 4/02

(54) **ELECTRODE PLATE FOR RECHARGEABLE BATTERY, MANUFACTURING METHOD THEREOF, AND RECHARGEABLE BATTERY USING THE SAME**

(30) Priority: 26.12.2022 KR 20220184839
(71) Applicant: Samsung SDI Co., Ltd., Yongin-si, Gyeonggi-do 17084 (KR)
(72) Inventor: Lee, Taeil, 17084 Yongin-si, Gyeonggi-do (KR); Ahn, Won-Gi, 17084 Yongin-si, Gyeonggi-do (KR); Bae, Juhye, 17084 Yongin-si, Gyeonggi-do (KR); Park, Gwangwon, 17084 Yongin-si, Gyeonggi-do (KR); Jeong, Min-young, 17084 Yongin-si, Gyeonggi-do (KR)
(74) Representative: Gulde & Partner

(57) **Abstract**

An embodiment of the present disclosure is to provide an electrode plate for a rechargeable battery that improves an impregnation characteristic of an electrolyte by inducing bending in a width direction of the electrode plate to improve rate capability. The embodiment of the present disclosure includes: an electrode current collector; a first active material layer that is formed in a pattern at the electrode current collector; and a second active material layer that covers the first active material layer and a portion of the electrode current collector.

## Description

### BACKGROUND OF THE INVENTION

### (a) Field of the Invention

The present disclosure relates to an electrode plate for a rechargeable battery, a manufacturing method thereof, and a rechargeable battery using the same.

### (b) Description of the Related Art

A rechargeable battery is a battery that repeatedly performs charging and discharging, unlike a primary battery. A small-capacity rechargeable battery is used in a portable small electronic device such as a mobile phone, a laptop computer, or a camcorder. A large-capacity and high-density rechargeable battery is used as a power source for driving a motor of a hybrid vehicle or an electric vehicle or an energy storage device of the hybrid vehicle or the electric vehicle.

The rechargeable battery includes an electrode assembly for charging and discharging a current, a case or a pouch for accommodating the electrode assembly and an electrolyte, and an electrode terminal connected to the electrode assembly to draw the electrode assembly out to the outside of the case or the pouch. The electrode assembly may be formed of a jelly roll type formed by winding an electrode plate and a separator or a stack type formed by stacking an electrode plate and a separator.

In this case, in order to improve a characteristic of the electrode plate, different composites may be used in a thickness direction. The electrode plate has a characteristic effect in the thickness direction as well as a characteristic effect in a width direction. Therefore, it is necessary to appropriately control the characteristic effects of the electrode plate in the thickness and width directions.

### SUMMARY OF THE INVENTION

The invention is defined by the appended claims. The description that follows is subjected to this limitation. Any disclosure lying outside the scope of said claims is only intended for illustrative as well as comparative purposes.

An embodiment of the present disclosure is to provide an electrode plate for a rechargeable battery that improves an impregnation characteristic of an electrolyte by inducing bending in a width direction of the electrode plate to improve rate capability, and a manufacturing method thereof.

Another embodiment of the present disclosure is to provide a rechargeable battery manufactured by the electrode plate for the rechargeable battery and the manufacturing method thereof.

### BRIEF DESCRIPTION OF THE DRAWINGS

FIG. 1 is a cross-sectional view of an electrode plate for a rechargeable battery according to an embodiment of the present disclosure, and is a state diagram in which a first active material layer and a second active material layer are coated on an electrode current collector.
FIG. 2 is a cross-sectional view of the electrode plate for the rechargeable battery of FIG. 1, and is a cross-sectional view illustrating a state in which the first active material layer and the second active material layer coated on the electrode current collector are dried.
FIG. 3 is a plane view of the electrode plate for the rechargeable battery of FIG. 2.
FIG. 4 is a graph comparing impregnation rates of electrolytes for a comparative example and an embodiment.
FIG. 5 is a graph comparing a relationship between a battery capacity and a discharge rate for the comparative example and the embodiment.
FIG. 6 is a flowchart of a manufacturing method of the electrode plate for the rechargeable battery according to an embodiment of the present disclosure.
FIG. 7 is a perspective view of the rechargeable battery according to a first embodiment of the present disclosure.
FIG. 8 is an exploded perspective view of an electrode assembly applied to the rechargeable battery according to a second embodiment of the present disclosure.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

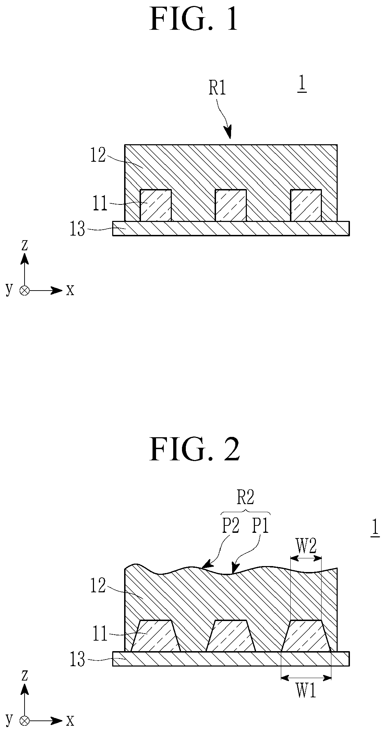

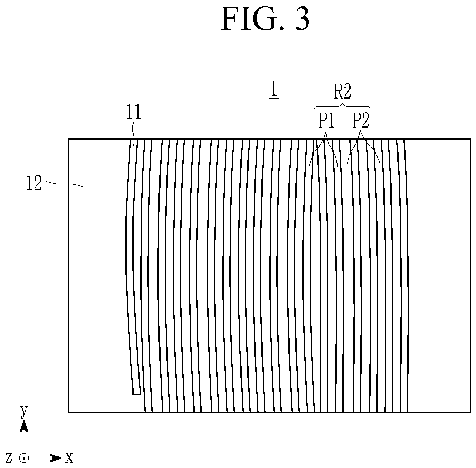

FIG. 1 is a cross-sectional view of an electrode plate for a rechargeable battery according to an embodiment of the present disclosure and is a state diagram in which a first active material layer and a second active material layer are coated on an electrode current collector, FIG. 2 is a cross-sectional view of the electrode plate for the rechargeable battery of FIG. 1 and is a cross-sectional view illustrating a state in which the first active material layer and the second active material layer coated on the electrode current collector are dried, and FIG. 3 is a plane view of the electrode plate for the rechargeable battery of FIG. 2.

Referring to FIGS. 1 to 3, the electrode plate 1 for the rechargeable battery according to the embodiment includes the electrode current collector 13, the first active material layer 11, and the second active material layer 12. The electrode current collector 13 is formed of a thin metal plate.

A material constituting the electrode current collector 13 may be any material that does not react with lithium, does not form an alloy or a compound with lithium, and has conductivity. For example, the material may be a metal or an alloy. For example, the metal may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. For example, the electrode current collector 13 may have a form selected from a sheet, a foil, a film, a plate, a porous material, a mesoporous material, a through hole-containing material, a polygonal ring, a mesh, a foam, and a nonwoven fabric, but the present disclosure is not necessarily limited to the form, and any form used in the art is possible.

The first active material layer 11 is formed in a pattern on the electrode current collector 13. The pattern may be such that the first active material layer 11 covers only parts of the electrode current collector 13, i.e. there are uncoated areas between coated areas. For example, the first active material layer 11 may be formed in a plurality of rows spaced apart in a width direction (an X-axis direction) at at least one surface of the electrode current collector 13, and may be continuously formed in a longitudinal direction (a Y-axis direction) crossing the width direction.

After the first active material layer 11 is dried, the first active material layer 11 has a trapezoidal cross-sectional structure in the electrode plate 1 for the rechargeable battery. That is, the first active material layer 11 is formed to have a first width W1 at a side of the electrode current collector 13, and is formed to have a second width W2 less than the first width W1 at a side of a surface of the second active material layer 12.

The first active material layer 11 may include a negative electrode active material, a binder, and optionally a conductive material. A carbon-based active material or a silicon-based active material may be used as the negative electrode active material.

The carbon-based active material may be a carbon-containing active material generally used in a negative electrode, and may include crystalline carbon, amorphous carbon, or a combination thereof. An example of the crystalline carbon may include natural graphite or artificial graphite that has no-shape, or sheet, flake, spherical, or fiber shape, and an example of the amorphous carbon may include a soft carbon, a hard carbon, mesophase pitch carbide, fired coke, or the like.

Specifically, the silicon-based active material may include silicon, a silicon-carbon composite, SiOₓ (0 < x < 2), an Si-Q alloy (where Q is an element selected from the group consisting of an alkali metal, an alkaline-earth metal, a group 13 element, a group 14 element, a group 15 element, a group 16 element, a transition metal, a rare earth element, and a combination thereof, and is not Si), or a combination thereof, and may be used by mixing at least one of these materials with SiO₂. The element Q may be an element selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

For example, the silicon-based active material may include a silicon-carbon composite including a silicon particle and a first carbon-based material. Here, the first carbon-based material may be crystalline carbon, amorphous carbon, or a combination thereof. When the silicon-carbon composite is used as the silicon-based active material, a stable cycle characteristic may be implemented while exhibiting high capacity.

In the silicon-carbon composite including the silicon particle and the first carbon-based material, a content of the silicon particle may be 30 wt% to 70 wt%. For example, the content of the silicon particle may be 40 wt% to 50 wt%. A content of the first carbon-based material may be 70 wt% to 30 wt%. For example, the content of the first carbon-based material may be 50 wt% to 60 wt%. When the content of the silicon particle and the content of the first carbon-based material are within the above range, a high-capacity characteristic and an excellent lifespan characteristic may be exhibited.

Alternatively, the silicon-based active material may include a silicon-carbon composite including a core in which a silicon particle and a second carbon-based material are mixed and a third carbon-based material surrounding the core. The silicon-carbon composite may realize a very high capacity and at the same time may improve a capacity retention rate and a high-temperature lifespan characteristic of the battery.

The binder serves to well attach negative electrode active material particles to each other and to well attach the negative electrode active material to the current collector. A non-aqueous binder, an aqueous binder, or a combination thereof may be used as the binder.

The non-aqueous binder may include an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may include a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combinations thereof.

When the aqueous binder is used as the binder, the aqueous binder may further include a thickener (that is, a cellulose-based compound capable of imparting viscosity). The cellulose-based compound may be used by mixing at least one of carboxymethyl cellulose, hydroxypropylmethyl cellulose, methyl cellulose, an alkali metal salt thereof, and the like. Na, K, or Li may be used as the alkali metal. A usage content of the cellulose-based compound may be 0.1 part by weight to 3 parts by weight with respect to 100 parts by weight of the negative electrode active material.

The conductive material may be used to impart conductivity to the electrode, and the conductive material that does not cause chemical change and is an electronic conductive material may be used in the battery. An example of the conductive material may be a conductive material including a carbon-based material such as natural graphite, artificial graphite, carbon black, acetylene black, ketjen black, a carbon fiber, or the like, a metal-based material such as a metal powder, a metal fiber, or the like of copper, nickel, aluminum, silver, or the like, a conductive polymer such as a polyphenylene derivative or the like, or a mixture thereof.

As an example, the first active material layer 11 includes the first active material with 95.40 wt% to 98.48 wt%, the conductive material with 0.027 wt% to 1.01 wt%, the thickener with 0.89 wt% to 1.01 wt%, and the binder with 1.20 wt% to 2.72 wt%, wherein the ingredients sum up to 100 wt%. Deterioration in processability of the electrode plate 1 and a cell characteristic may occur if the respective ratio is out of range.

When the second active material layer 12 is dried, the second active material layer 12 has a second roughness R2 of FIGS. 2 and 3 greater than a first roughness R1 of FIG. 1 of a surface of the second active material layer prior to drying (i.e. when the second active material layer 12 is coated).

In other words, in the manufacturing process, a slurry of the first active material is first applied to a surface of the electrode current collector in a pattern. When the first active material is dried, the first active material layer 11 is formed. The first active material layer 11 is then overlaid with a slurry of the second active material. The surface of the still paste-like layer of the second active material has a roughness R1. The second active material layer 12 is formed by drying the slurry and has a roughness R2. The roughness R2 of the second active material layer 12 is increased compared to the roughness R1 of the coated slurry.

The roughness parameters may be determined according to ISO 21920-3. Specifically, the arithmetic average roughness, Ra, may be determined.

As an example, the second active material layer 12 includes the second active material with 95.40 wt% to 98.48 wt%, the conductive material with 0.027 wt% to 1.01 wt%, the thickener with 0.90 wt% to 1.01 wt%, and the binder with 0.40 wt% to 1.70 wt%, wherein the ingredients sum up to 100 wt%. Deterioration in processability of the electrode plate 1 and a cell characteristic may occur if the respective ratio is out of range.

For example, the first active material includes the carbon-based active material and the silicon-based active material, and the second active material layer 12 includes the carbon-based active material.

After the second active material layer 12 is dried, the second active material layer 12 forms a surface contact angle with 100° to 110° with respect to water at a surface of the second active material layer 12. The surface contact angle may be measured according to ASTM D7334-2013. In addition, the surface of the second active material layer 12 may form the second roughness R2 to form a contact angle of 105° with respect to water.

In a comparative example in which the second roughness R2 is not formed, a surface of an active material layer of an electrode plate forms a contact angle with 95° to 100° with respect to water. In addition, the surface of the active material layer of the comparative example may form a contact angle with 97°.

The second roughness R2 of the surface of the second active material layer 12 of the embodiment increases the contact angle. That is, the second roughness R2 increases the contact angle of the surface of the second active material layer 12 with respect to an electrolyte to improve an impregnation characteristic of the electrolyte with respect to the second active material layer 12 in a width direction (an X-axis direction) of the electrode plate 1 for the rechargeable battery.

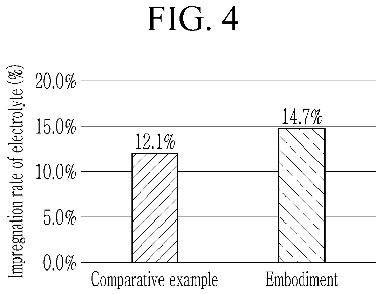

FIG. 4 is a graph comparing impregnation rates of electrolytes for the comparative example and the embodiment. Referring to FIG. 4, the surface of the active material layer of the comparative example has a contact angle of 97° and an electrolyte impregnation rate with 12.1 %. In contrast, the surface of the second active material layer 12 of the embodiment has a contact angle of 105°and an electrolyte impregnation rate of 14.7 %.

Due to a difference in the electrolyte impregnation rate, the electrode plate 1 for the rechargeable battery of the embodiment has a higher rate capability than the comparative example in the width direction (the X-axis direction).

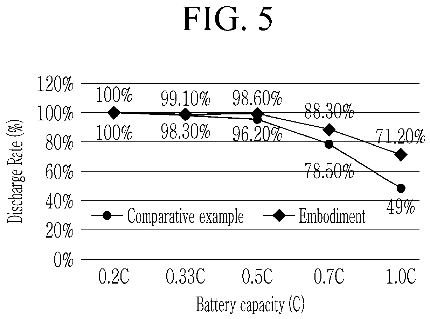

FIG. 5 is a graph comparing a relationship between a battery capacity and a discharge rate for the comparative example and the embodiment. Referring to FIG. 5, the surface of the active material layer of the comparative example has the discharge rate of 49 % due to the electrolyte impregnation rate of 12.1 % at 0.2 coulomb (C) discharge to 1.0 coulomb (C) discharge of the battery capacity.

In contrast, the surface of the second active material layer 12 of the embodiment has the discharge rate of 71.2 % due to the electrolyte impregnation rate of 14.7 % at 0.2 coulomb (C) discharge to 1.0 coulomb (C) discharge of the battery capacity. That is, the example has improved rate capability since a drop in the discharge rate of the example is less than that of the comparative example.

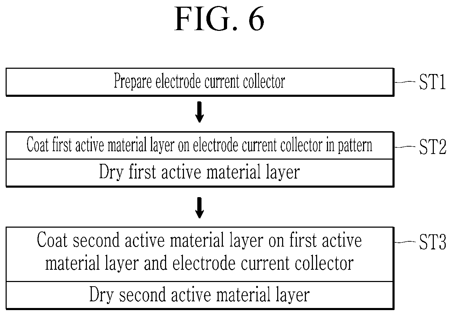

FIG. 6 is a flowchart of a manufacturing method of the electrode plate for the rechargeable battery according to an embodiment of the present disclosure. Referring to FIG. 6, the manufacturing method of the electrode plate for the rechargeable battery of the embodiment includes a first step ST1, a second step ST2, and a third step ST3.

In the first step ST1, a thin electrode current collector 13 is provided, respectively prepared. The electrode current collector 13 may be formed of a copper or aluminum thin plate depending on whether it is a negative electrode current collector or a positive electrode current collector.

In the second step ST2, the first active material layer 11 is formed by coating a first active material slurry on the electrode current collector 13 in a pattern. The second step ST2 further includes a step of drying the first active material layer 11. In the drying step, the first active material layer 11 coated in the pattern is dried.

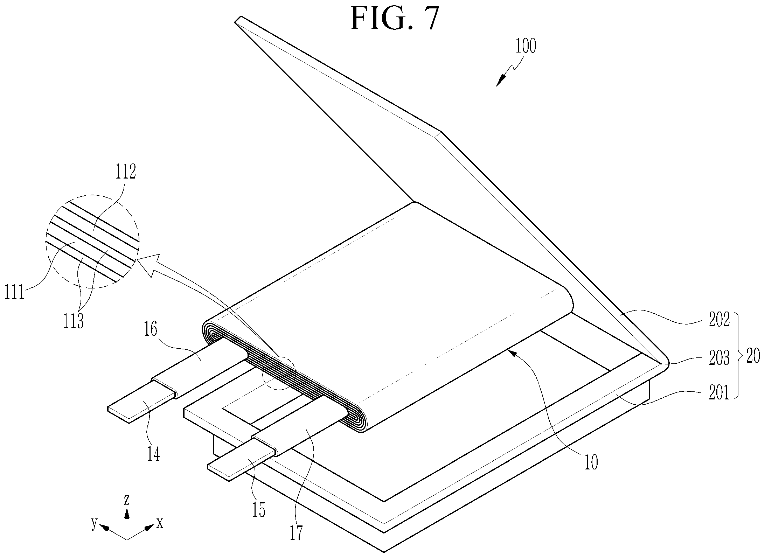

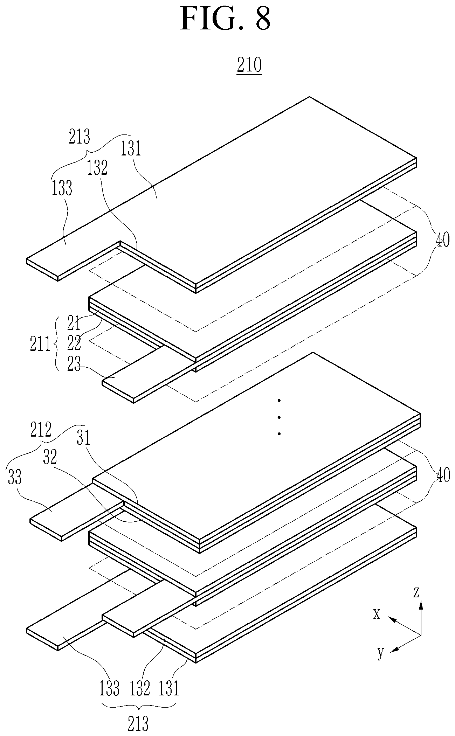

In the present embodiment, the first active material layer 11 may be formed at one surface of the electrode current collector 13 (see a single-sided second electrode plate (or a single-surface second electrode plate) 213 of FIG. 8), but may be sequentially formed at both surfaces of the electrode current collector 13 (see first electrode plates 111 and 211 and second electrode plates 112 and 212 of FIGS. 7 and 8).

In the third step ST3, the second active material layer 12 is formed by coating a second active material slurry on the first active material layer 11 and the electrode current collector 13. In this case, the second active material slurry is coated also on a surface of the electrode current collector 13 at which the first active material layer 11 is not formed.

Therefore, the first active material layer 11 and the second active material layer 12 are alternately formed in the width direction (the X-axis direction) at a portion adjacent to the surface of the electrode current collector 13. In addition, a portion where the first active material layer 11 is provided forms a two-layer structure of the first and second active material layers 11 and 12. A portion where the first active material layer 11 is not provided forms a single layer structure of the second active material layer 12.

As the single layer structure and the two-layer structure are alternately disposed along the width direction (the X-axis direction) of the electrode current collector 13, the second active material layer 12 forms the second roughness R2 when the second active material layer 12 is dried greater than the first roughness R1 of a surface of the second active material layer formed when the second active material layer 12 is coated. As shown in FIG. 3, the second roughness R2 forms a concave portion P1 and a convex portion P2 on a surface of the second active material layer 12 depending on presence or absence of the first active material layer 11.

The third step ST3 further includes a step of drying the second active material layer 12. In the drying step, the coated second active material layer 12 is dried. As described above, the second and third steps ST2 and ST3 in which the first active material slurry is coated and dried and then the second active material is coated and dried may be repeatedly performed. In addition, in the second and third steps ST2 and ST3, the first and second active material slurries may be coated with a difference in coating time to be coated at the same time, and then may be dried at the same time.

Hereinafter, rechargeable batteries including the electrode plate 1 for the rechargeable battery according to the embodiment will be described. For convenience, a pouch type rechargeable battery to which the electrode plate 1 for the rechargeable battery is applied will be described as an example. However, the present disclosure is not limited thereto, and the electrode plate 1 for the rechargeable battery according to the embodiment may be applied to a circular rechargeable battery and a prismatic rechargeable battery.

FIG. 7 is a perspective view of the rechargeable battery according to a first embodiment of the present disclosure. Referring to FIG. 7, the rechargeable battery 100 of the first embodiment includes an electrode assembly 10 for charging and discharging an electric current, and a pouch 20 accommodating the electrode assembly 10 and an electrolyte.

The pouch 20 forms a sealing portion by thermally bonding outer edges of a first exterior portion 201 and a second exterior portion 202. The first and second exterior portions 201 and 202 are integrally connected by a rear connection portion 203. Although not shown, the first and second exterior portions may be separately formed without the rear connection portion to be thermally bonded at outer edges of the first exterior portion and the second exterior portion.

The electrode assembly 10 is formed in a form of a jelly roll by disposing the first electrode plate (referred to as a positive electrode plate for convenience) 111 and the second electrode plate (referred to as a negative electrode plate for convenience) 112 with a separator 113 interposed therebetween to wind the first electrode plate, the second electrode plate, and the separator.

The electrode assembly 10 is formed flat by pressing a side surface of the wound cylindrical shape. The electrode assembly 10 is connected to the positive electrode plate 111 and the negative electrode plate 112 to be drawn out of the pouch 20 through a first tab 14 and a second tab 15 provided at one side of a winding end surface. The first tab 14 and the second tab 15 are disposed at the sealing portion with insulating tapes 16 and 17 interposed therebetween.

The positive electrode plate 111 includes a coated portion in which a positive electrode active material is applied to an electrode current collector of a thin metal plate and an uncoated portion set as an electrode current collector exposed by not applying the positive electrode active material. For example, the first tab 14 connected to the electrode current collector and the uncoated portion of the positive electrode plate 111 may be formed of aluminum (Al).

The negative electrode plate 112 includes a coated portion in which a negative electrode active material different from the active material of the positive electrode plate 111 is applied to an electrode current collector of a thin metal plate and an uncoated portion set as an electrode current collector exposed by not applying the negative electrode active material. For example, the electrode current collector and the uncoated portion of the negative electrode plate 112 may be formed of copper (Cu), and the second tab 15 connected to the uncoated portion may be formed of nickel (Ni).

The electrode plate 1 for the rechargeable battery of FIGS. 1 to 3 may be applied to at least one of the positive electrode plate 111 and the negative electrode plate 112 of FIG. 7, and may be applied to the positive and negative electrode plates 111 and 112. For convenience, a structure of the electrode plate 1 for the rechargeable battery will be described by applying the structure of the electrode plate 1 to the positive and negative electrode plates 111 and 112.

Referring to FIGS. 1 to 3 and 7, the positive and negative electrode plates 111 and 112 include the first active material layer 11 formed in a pattern on the electrode current collector 13, and the second active material layer 12 covering the first active material layer 11 and the electrode current collector 13.

In the positive and negative electrode plates 111 and 112, when the second active material layer 12 is dried, the second active material layer 12 forms the second roughness R2 greater than the first roughness R1 of a surface of the second active material layer formed when the second active material layer 12 is coated.

The first active material layer 11 has a trapezoidal cross-sectional structure. The first active material layer 11 has the first width W1 at a side of the electrode current collector 13 and the second width W2 less than the first width W1 at a side of a surface of the second active material layer 12.

The second active material layer 12 has a surface contact angle of 100° to 110° at a surface of the second active material layer 12.

In the negative electrode plate 112, the second roughness R2 of the surface of the second active material layer 12 increases the contact angle. That is, the second roughness R2 increases the contact angle of the surface of the second active material layer 12 with respect to the electrolyte to improve an impregnation characteristic of the electrolyte with respect to the second active material layer 12 in a width direction (an X-axis direction) of the negative electrode plate 112.

FIG. 8 is an exploded perspective view of an electrode assembly applied to the rechargeable battery according to a second embodiment of the present disclosure. Referring to FIG. 8, the rechargeable battery 200 according to the second embodiment forms a rechargeable battery by including an electrode assembly 210 in the pouch of FIG. 7 or a case together with an electrolyte.

The electrode assembly 210 may include the first electrode plate (a positive electrode plate) 211 and the second electrode plate (a negative electrode plate) 212 that are formed as single sheets and are stacked with a separator 40 therebetween, and the single-sided second electrode plate (a single-sided negative electrode plate) 213 stacked at at least one side of outermost sides in a stacking direction.

The first electrode plate (the positive electrode plate) 211 includes an active material layer 22 on both surfaces of an electrode current collector plate 21. The electrode current collector plate 21 may include an uncoated portion 23 protruding to one side so that the uncoated portion 23 is connected to a tab (not shown) drawn out of the pouch or the case when the rechargeable battery is assembled.

The second electrode plate (the negative electrode plate) 212 includes an active material layer 32 on both surfaces of an electrode current collector plate 31. The electrode current collector plate 31 may include an uncoated portion 33 protruding to one side so that the uncoated portion 33 is connected to a tab (not shown) drawn out of the pouch or the case when the rechargeable battery is assembled. The uncoated portion 23 of the first electrode plate 211 and the uncoated portion 33 of the second electrode plate 212 may be drawn out in the same direction, and may be spaced apart from each other in an X-axis direction.

The single-sided second electrode plate (the single-sided negative electrode plate) 213 is provided at at least one side of upper and lower outermost sides of the electrode assembly 210. For convenience, the present embodiment illustrates the electrode assembly 210 in which single-sided second electrode plates 213 (single-sided negative electrode plates) are provided at both upper and lower outermost sides of the electrode assembly 210.

The single-sided second electrode plate 213 may be disposed at one side of the first electrode plate (the positive electrode plate) 211 at both sides in the stacking direction with the separator 40 interposed therebetween. The first electrode plate (the positive electrode plate) 211 and the single-sided second electrode plate 213 adjacent to each other in the stacking direction may be repeatedly stacked with the separator 40 interposed therebetween.

The single-sided second electrode plate 213 includes an active material layer 132 on a single surface of an electrode current collector plate 131. Electrode current collector plates 131 may include uncoated portions 133 that protrude to one side and are spaced apart from each other so that the electrode current collector plates 131 are connected to tabs (not shown) drawn out of the pouch or the case when the rechargeable battery is assembled.

The electrode plate 1 for the rechargeable battery of FIGS. 1 to 3 may be applied to at least one of the positive electrode plate 211, the negative electrode plate 212, and the single-sided negative electrode plate 213 of FIG. 8, and may be applied to the positive electrode plate 211, the negative electrode plate 212, and the single-sided negative electrode plate 213.

Referring to FIGS. 1 to 3 and 8, the active material layers 32, 22, and 132 of the positive and negative electrode plates 211 and 212 and the single-sided negative electrode plate 213 may be formed as the first active material layer 11 formed in a pattern on the electrode current collector 13, and the second active material layer 12 covering the first active material layer 11 and the electrode current collector 13.

In the active material layers 32, 22, and 132 of the positive and negative electrode plates 211 and 212 and the single-sided negative electrode plate 213, when the second active material layer 12 is dried, the second active material layer 12 forms the second roughness R2 greater than the first roughness R1 of a surface of the second active material layer formed when the second active material layer 12 is coated.

The first active material layer 11 has a trapezoidal cross-sectional structure. The first active material layer 11 has the first width W1 at a side of the electrode current collector 13 and the second width W2 less than the first width W1 at a side of a surface of the second active material layer 12.

In the active material layers 32, 22, and 132 of the positive and negative electrode plates 211 and 212 and the single-sided negative electrode plate 213, the first active material layer 11 includes the first active material with 97.35 wt%, the conductive material with 0.05 wt%, the thickener with 0.9 wt%, and the binder with 1.7 wt%, and the first active material includes graphite and a silicon-carbon nanocomposite (SCN) material.

The second active material layer 12 includes the first active material with 97.35 wt%, the conductive material with 0.05 wt%, the thickener with 0.9 wt%, and the binder with 1.7 wt%, and the second active material includes graphite. The second active material layer 12 has a surface contact angle of 100° to 110° at a surface of the second active material layer 12.

In the active material layers 32, 22, and 132 of the positive and negative electrode plates 211 and 212 and the single-sided negative electrode plate 213, the second roughness R2 of the surface of the second active material layer 12 increases the contact angle. That is, the second roughness R2 increases the contact angle of the surface of the second active material layer 12 with respect to the electrolyte to improve an impregnation characteristic of the electrolyte with respect to the second active material layer 12 in a width direction (an X-axis direction) of the positive and negative electrode plates 211 and 212 and the single-sided negative electrode plate 213.

**<Description of symbols>**

| | | | |
|---|---|---|---|
| 1: | electrode plate for rechargeable battery | | |
| 10, 210: | electrode assembly | | |
| 11: | first active material layer | 12: | second active material layer |
| 13: | electrode current collector | 14: | first tab |
| 15: | second tab | 16, 17: | insulating tape |
| 20: | pouch | 21, 31, 131: | electrode current collector plate |
| 22, 32, 132: | active material layer | 23, 33, 133: | uncoated portion |
| 40, 113: | separator | 100, 200: | rechargeable battery |
| 111, 211: | first electrode plate (positive electrode plate) | | |
| 112, 212: | second electrode plate (negative electrode plate) | | |
| 201: | first exterior portion | 202: | second exterior portion |
| 203: | rear connection portion | | |
| 213: | single-sided second electrode plate (single-sided negative electrode plate) | | |
| R1: | first roughness | R2: | second roughness |
| W1: | first width | W2: | second width |

## Claims

1. An electrode plate (1) for a rechargeable battery, comprising:
an electrode current collector (13);
a first active material layer (11) that is formed in a pattern at the electrode current collector (13); and
a second active material layer (12) that covers the first active material layer (11) and a portion of the electrode current collector (13).

2. The electrode plate of claim 1, wherein the second active material layer (12) has a second roughness (R2) when the second active material layer (12) is dried greater than a first roughness (R1) of a surface of the second active material layer (12) prior to drying.

3. The electrode plate of claim 1 or 2, wherein the first active material layer (11) has a trapezoidal cross-sectional structure.

4. The electrode plate of any one of the preceding claims, wherein the first active material layer (11) comprises:
a first width (W1) at a side of the electrode current collector (13); and
a second width (W2) less than the first width (W1) at a side of a surface of the second active material layer (12).

5. The electrode plate of any one of the preceding claims, wherein the second active material layer (12) has a surface contact angle of 100° to 110° at a surface of the second active material layer (12).

6. A manufacturing method of an electrode plate (1) for a rechargeable battery, comprising:
a first step of providing an electrode current collector (13);
a second step of forming a first active material layer (11) by coating a first active material slurry on the electrode current collector (13) in a pattern; and
a third step of forming a second active material layer (12) by coating a second active material slurry on the first active material layer (11) and the electrode current collector (13),
wherein the second active material layer (12) has a uniform thickness in a width direction of the electrode current collector (13).

7. The manufacturing method of claim 6, wherein the second step includes a first drying step of drying the first active material layer (11), and the third step includes a second drying step of drying the second active material layer (12).

8. The manufacturing method of claim 6, wherein the second step and the third step proceed sequentially or simultaneously.

9. A rechargeable battery, comprising a first electrode plate and a second electrode plate provided on both surfaces of a separator,
wherein at least of the first electrode plate and the second electrode plate is an electrode plate as defined in claim 1.
